# EUROPEAN PATENT SPECIFICATION

(11) **EP 3 822 096 B1**
(45) Date of publication and mention of the grant of the patent: **24.01.2024**
(21) Application number: 20206989.4
(22) Date of filing: 11.11.2020
(51) Int. Cl.: B60C 11/13, B60C 19/00, B60C 11/03

(54) **TIRES WITH NOISE-REDUCING MAIN GROOVES**
REIFEN MIT GERÄUSCHREDUZIERENDEN HAUPTRILLEN
PNEUMATIQUES AVEC DES RAINURES PRINCIPALES RÉDUISANT LE BRUIT

(30) Priority: 12.11.2019 KR 20190143901
(43) Date of publication of application: 19.05.2021
(73) Proprietor: HANKOOK TIRE & TECHNOLOGY CO., LTD, Gyeonggi-do 13494 (KR)
(72) Inventor: KIM, Il Sik, Yuseong-gu, Daejeon 34127 (KR); KWAK, Seung Ju, Hanam-si, Gyeonggi-do 12594 (KR); SON, Su Jin, Gangnam-gu, Seoul 06133 (KR); KIM, Ki Bum, Yuseong-gu, Daejeon 34127 (KR); LEE, Seung Hwan, Yuseong-gu, Daejeon 34127 (KR)
(74) Representative: Zimmermann, Tankred Klaus

(56) References cited:
- EP-A1- 1 568 514
- EP-A1- 2 502 757
- EP-A1- 3 501 852
- EP-A2- 1 541 383
- CN-U- 203 567 481
- JP-A- 2006 182 299
- US-B1- 6 415 835

## Description

### BACKGROUND

### Field

The present invention relates to a tire with noise-reducing main grooves and more particularly to a tire with noise-reducing main grooves for reducing resonance noise of the tire.

### Description of the Related Art

A vehicle which goes forward by rolling wheels is inherently has no choice but to make noise. However, noise such as engine sound coming from inside and outside the vehicle, wind noise (sound of wind), etc., while driving, always annoys the driver and passengers. For this reason, it is common to block the noise by using a soundproofing material, a sound-absorbing material, etc.

However, the Ministry of Environment has recently announced that it will introduce "tire noise insulation performance indication system" which is being carried out in European Union (EU) from 2019. In response to this, technology developments to reduce noise are being made ahead of enforcement of the system. Particularly, while, in the past, the focus was on reducing the generation of noise inside the vehicle such as the engine, there are increasing cases of applying a new low noise technology from the early stage of tire product development in order to minimize the noise generated outside the vehicle such as from a tire.

In particular, tires for electric vehicles, whose market share is rapidly increasing in recent years, are required to have noise characteristics different from those of an Internal Combustion Engine (ICE) vehicle.

For example, in the case of an ICE vehicle, the noise from the engine causes the largest noise over the entire range of indoor noise. However, since the electric vehicle does not have an engine, it has an overall low noise level and the largest noise generated from the tire. Therefore, recently, a low noise tire becomes gradually more important.

A peak due to pipe resonance occurs in a range of 1 kHz in tire noise, and the resulting effect occupies a very large proportion of the overall noise. Specifically, when the main groove in the traveling direction of the tire contacts the ground, the ground and the main groove form a pipe shape. Here, pipe resonance noise in a 1 kHz band is generated due to pipe-shaped flow inside the main groove.

Therefore, there is a necessity of a technology for reducing the pipe resonance noise generated in the main groove of the tire.

### PRIOR ART DOCUMENTS

Noise reduction tires are described, e.g., in KR 10-1957640 B1, in EP 2 502 757 A1 and in JP 2006 182299 A. JP 2006 182299 A discloses a tire according to the preamble of claim 1.

### SUMMARY

It is the object of the present invention to solve the aforementioned problems and provide a tire with noise-reducing main grooves for reducing resonance noise of the tire.

This object is achieved by a tire according to claim 1.

The present invention provides a tire with noise-reducing main grooves. The tire includes: a groove portion which is formed to extend circumferentially along a circumference of a tire tread; and a plurality of knurled portions which are formed on bottom and side surfaces of the groove portion. The plurality of knurled portion are configured to reduce noise energy by narrowing an air path formed when the groove portion and the ground contact each other.

Each of the knurled portion includes: a first protrusion which is formed on the bottom surface of the groove portion and extends in a width direction of the groove portion and extends in a diagonal direction; a second protrusion which is formed to extend in a height direction of one side of the groove portion and extends from one side of the first protrusion in the same direction as that of the first protrusion; and a third protrusion which is formed to extend in a height direction of the other side of the groove portion and extends from the other side of the first protrusion in the same direction as that of the first protrusion.

The plurality of the knurled portions are formed to extend in zigzags in a longitudinal direction of the groove portion and are directly connected to each other.

Protrusion heights of the second protrusion and the third protrusion decreases gradually toward the upper portions thereof.

According to a preferred embodiment of the present invention, one side of the second protrusion extends with the first protrusion, and the other side of the second protrusion extends with the second protrusion of an adjacent knurled portion. One side of the third protrusion extends with the first protrusion, and the other side of the third protrusion extends with the third protrusion of an adjacent knurled portion.

According to another preferred embodiment of the present invention, a protrusion height of the knurled portion is greater than 0 and less than or equal to 0.8 mm.

According to a further preferred embodiment of the present invention, a thickness of the knurled portion is from 0.6 mm to 1.2 mm.

According to another preferred embodiment of the present invention, the knurled portion is connected in zigzags such that a pitch interval is from 10 mm to 30 mm.

### Advantageous Effects

According the present invention, which has the above configuration, the peak of the pipe resonance noise is reduced by forming a predetermined shape on the groove of the tire, so that noise generated from the tire during the driving is reduced.

Also, according to the present invention, even though the knurled portion is formed in the groove of the tire for the purpose of reducing the peak of the pipe resonance noise, the drainage function of the groove is not decreased.

The effect of the present invention is not limited to the above effects and should be construed as including all the effects that can be inferred from the configuration of the present invention disclosed in the detailed description or claims of the present invention.

### BRIEF DESCRIPTION OF THE DRAWINGS

Fig. 1 is a perspective view of a tire with noise-reducing main grooves according to an embodiment of the present invention;
Fig. 2 is a cross sectional view of the noise-reducing main groove according to the embodiment of the present invention;
Fig. 3 is a top view of a knurled portion according to the embodiment of the present invention;
Fig. 4 shows a picture of the tire with the noise-reducing main grooves according to the embodiment of the present invention;
Fig. 5 is a graph showing an area where pipe resonance noise occurs as a peak;
Fig. 6 is a graph showing a comparison result between a conventional example and the pipe resonance noise of a mock-up structure of the present invention;
Fig. 7 is a graph showing a comparison result between a conventional example and the pipe resonance noise of an actual product of the present invention; and
Figs. 8 and 9 are graphs showing the pipe resonance noise according to the shape of the knurled portion according to the embodiment of the present invention.

### DETAILED DESCRIPTION

Hereinafter, the present invention will be described with reference to the accompanying drawings. However, the present invention may be embodied in various forms and is not limited to the embodiment described in the present specification. In the drawings, parts irrelevant to the description will be omitted for a clear description of the present disclosure. Similar reference numerals will be assigned to similar parts throughout this patent document.

Throughout the specification, when it is mentioned that a portion is "connected (accessed, contacted, combined)" to another portion, it includes not only "is directly connected" but also "indirectly connected" with another member placed therebetween. Additionally, when it is mentioned that a portion "includes" a component, it means that the portion does not exclude but further includes other components unless there is a special opposite mention.

Terms used in the present specification are provided for description of only specific embodiments of the present invention, and not intended to be limiting. An expression of a singular form includes the expression of plural form thereof unless otherwise explicitly mentioned in the context. In the present specification, it should be understood that the term "include" or "comprise" and the like is intended to specify characteristics, numbers, steps, operations, components, parts or any combination thereof which are mentioned in the specification, and intended not to previously exclude the possibility of existence or addition of at least one another characteristics, numbers, steps, operations, components, parts or any combination thereof.

Hereinafter, the embodiments of the present invention will be described in detail with reference to the accompanying drawings.

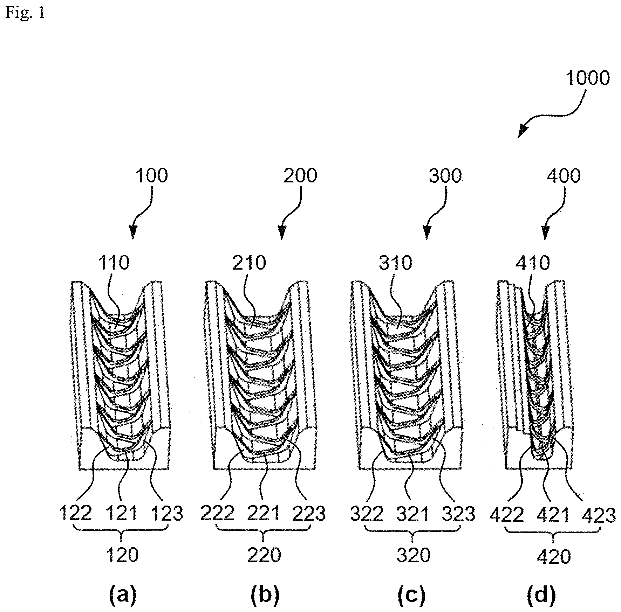

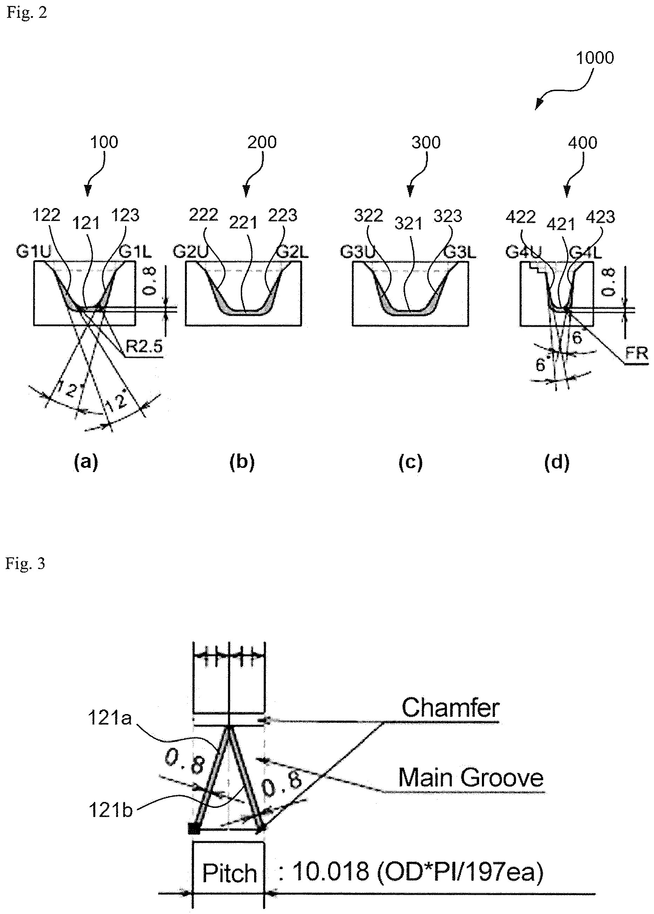

Fig. 1 is a perspective view of a tire with noise-reducing main grooves according to the embodiment of the present invention. Fig. 2 is a cross sectional view of the noise-reducing main groove according to the embodiment of the present invention.

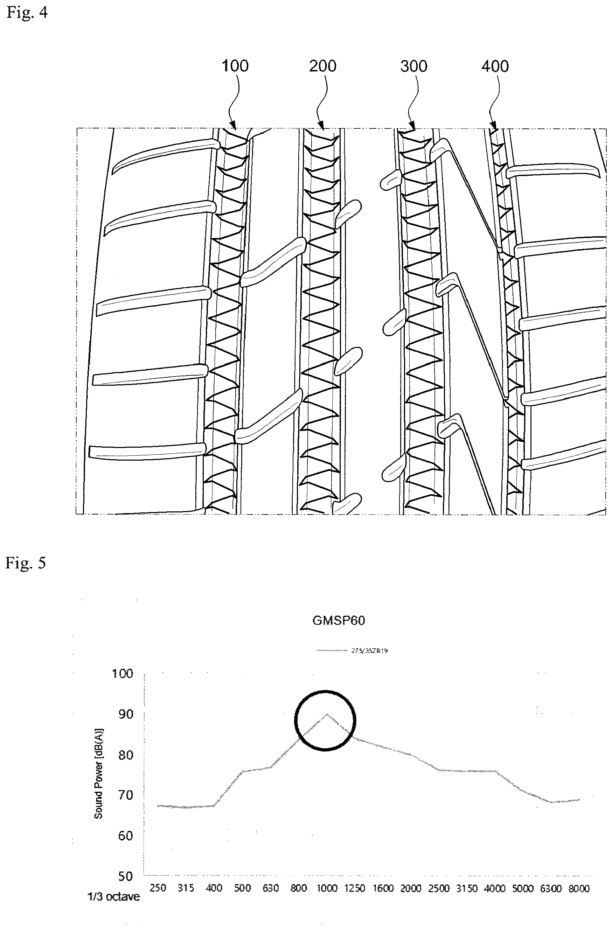

Fig. 3 is a top view of a knurled portion according to the embodiment of the present invention. Fig. 4 shows a picture of the tire with the noise-reducing main grooves according to the embodiment of the present invention.

As shown in Figs. 1 to 4, a tire 1000 with the noise-reducing main grooves includes a plurality of the noise-reducing main grooves 100, 200, 300, and 400.

Specifically, the tire 1000 with the noise-reducing main grooves includes the first noise-reducing main groove 100, the second noise-reducing main groove 200, the third noise-reducing main groove 300, and the fourth noise-reducing main groove 400.

The first noise-reducing main groove 100 includes a groove portion 110 and a knurled portion 120.

The groove portion 110 extends circumferentially along the circumference of a tire tread. That is, the groove portion 110 may be a main groove formed along the traveling direction of the tire.

The knurled portion 120 is formed to protrude from the bottom and side surfaces of the groove portion 110 and narrows an air path formed when the groove portion 110 contacts the ground, thereby reducing noise energy.

The knurled portion 120 includes a first protrusion 121, a second protrusion 122, and a third protrusion 123.

Also, there is provided a plurality of the knurled portions 120. The plurality of knurled portions 120 are formed in zigzags along the longitudinal direction of the groove portion 110 and are extended mutually.

The first protrusion 121 in formed on the bottom surface of the groove portion 110 and extends in the width direction of the groove portion 110.

More specifically, the first protrusion 121 extends from the bottom surface of the groove portion 110 in the width direction of the groove portion 110 and is formed to extend in a diagonal direction.

The second protrusion 122 is formed to extend in a height direction of one side of the groove portion 110 and is formed to extend from one side of the first protrusion 121.

The second protrusion 122 is formed to extend in the same direction as that of the first protrusion 121 formed to extend in the diagonal direction.

The third protrusion 123 is formed to extend in a height direction of the other side of the groove portion 110 and is formed to extend from the other side of the first protrusion 121.

As with the second protrusion 122, the third protrusion 123 is formed to extend in the same direction as that of the first protrusion 121 formed to extend in the diagonal direction.

More specifically, one side of the second protrusion 122 may extend with the first protrusion 121, and the other side of the second protrusion 122 may extend with the second protrusion of an adjacent knurled portion.

Here, in order that the knurling portion 120 is formed to have a zigzag shape, an adjacent knurled portion is formed in a direction facing each other. That is, the second protrusion of the adjacent knurled portion, which extends with the second protrusion 122, has a 'V' shape. One side of the third protrusion 123 may extend with the first protrusion 121, and the other side of the third protrusion 123 may extend with the third protrusion of an adjacent knurled portion. That is, the third protrusion of the adjacent knurled portion, which extends with the third protrusion 123, has a 'V' shape.

Here, the knurled portions 120 are directly connected to each other.

When a protrusion height of the knurled portion 120 from the bottom surface exceeds 0.8 mm, a defect may occur in the drainage function of the tread portion required when driving on rainy or snowy roads. The protrusion height of the knurled portion 120 may be greater than 0 and less than or equal to 0.8 mm. Also, the second protrusion 122 and the third protrusion 123 of the knurled portion 120 may be provided to extend to the uppermost ends of both sidewalls of the groove portion 110. The protrusion heights of the second protrusion 122 and the third protrusion 123 decrease gradually toward the upper portions thereof.

The thickness of the knurled portion 120 may be formed to be 0.6 mm to 1.2 mm.

A radius of a connection portion between the first protrusion 121 and the second protrusion 122 and a radius of a connection portion between the first protrusion 121 and the third protrusion 123 are from full radii forming a circular shape to 2.5 mm.

Also, as shown in Fig. 3, a pitch interval of the knurled portion 120 formed in zigzags may be from 10 mm to 30 mm.

The second noise-reducing main groove 200, the third noise-reducing main groove 300, and the fourth noise-reducing main groove 400 have the same configuration as the aforementioned configuration of the first noise-reducing main groove 100.

However, the protrusion height, thickness, and radius of the knurled portion 120 of each of the noise-reducing main grooves may correspond to those of the shape of the groove portion 110 within the above range.

Specifically, as shown in Figs. 1 and 2, the shapes of the groove portions 110, 210, and 310 of the first noise-reducing main groove 100, the second noise-reducing main groove 200, and the third noise-reducing main groove 300 are the same as each other. However, the width of a groove portion 410 of the fourth noise-reducing main groove 400 is formed to be narrower. Therefore, the protrusion height, thickness, and radius of a knurled portion 420 may be formed differently.

Fig. 5 is a graph showing an area where pipe resonance noise occurs as a peak.

As shown in Fig. 5, in the case of a conventional tire has a tubular shape when the main groove contacts the ground. Due to this tubular shape, noise is generated by the pipe resonance noise. This is related to the size of the tire and a ground field on the ground, and the noise has a band of about 800 to 1200 Hz. The noise in this band has a great influence on the overall tire rolling noise.

Accordingly, the tire 1000 having the noise-reducing main groove is provided such that the pipe resonance noise can be reduced by applying the embossed knurled portion 120 to the wall surface and the bottom surface of the groove portion 110.

Specifically, in consideration of Visco-thermal effects, which is the most important noise attenuation mechanism in the tube, the knurled portion 120 of the embodiment of the present invention is provided such that air flow is brought into contact with as much surface area of the groove portion 110 as possible, so that great Visco-thermal effects are produced.

Also, according to the embodiment of the present invention, the height of the knurled portion 120 is controlled to be 0.8 mm or less, so that the knurled portion 120 is applied to the wall surface and the bottom surface without significantly affecting the drainage performance, thereby increasing the flow contact surface and attenuating the noise.

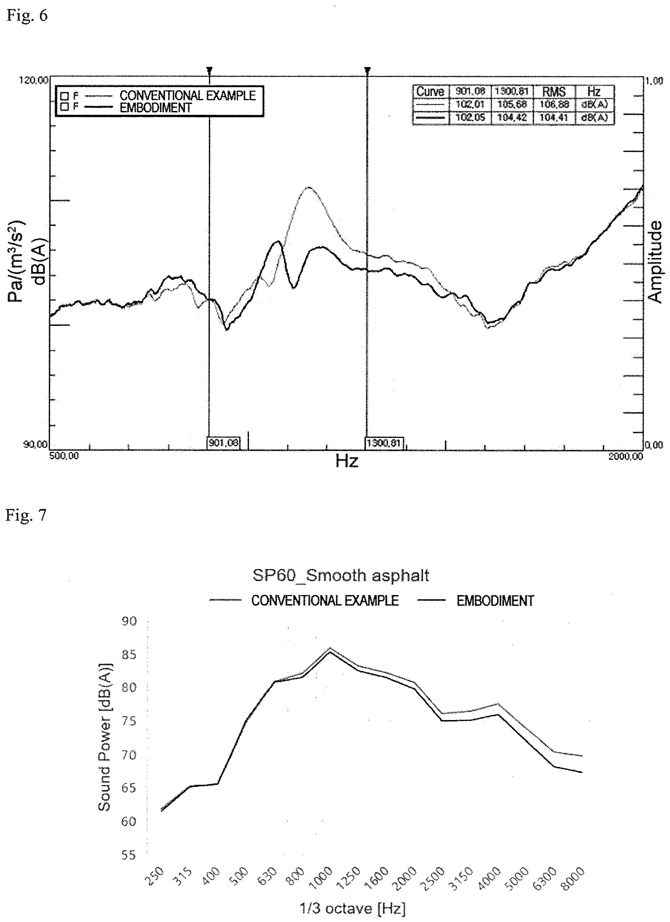

Fig. 6 is a graph showing a comparison result between a conventional example and the pipe resonance noise of a mock-up structure of the present invention.

Referring to Fig. 6, in order to verify the pipe resonance reduction effect of the present invention, first, a mock-up in which the knurled portion 120 is applied to the groove portion 110 is used. A Q-source, that is a shaker, and a microphone for noise measurement are used to measure the noise generated in the mock-up. More specifically, the frequency response function between the Q-source and the mock-up is measured, and a smooth main groove shape of a general tire and the noise-reducing main groove of the present invention are manufactured as a mock-up and are used for verification of the pipe resonance reduction.

Fig. 6 shows the result, the conventional example shows a groove in which the knurled portion is not formed, and the embodiment of the present invention shows a signal of the tire with the noise-reducing main grooves. As a result of the verification, it can be seen that the pipe resonance peak has been significantly reduced, and the pipe resonance peak has been reduced by about 2.47 dB, that is to say, from 106.88 dB to 104.41 dB based on RMS in a band of 900 Hz to 1300 Hz.

Fig. 7 is a graph showing a comparison result between a conventional example and the pipe resonance noise of an actual product of the present invention.

Referring to Fig. 7, the tire 1000 with the noise-reducing main grooves has been manufactured to measure noise when driving at 60 km/h with a single tire by using a dynamo in an anechoic chamber. As a result, as shown in Fig. 7, 0.6 dB reduction effect was shown in a band of 1 kHz, and noise reduction effect was shown in the entire band after 800 Hz. Therefore, 0.6 dB reduction effect was shown not only in the pipe resonance noise band but also in the total value of noise.

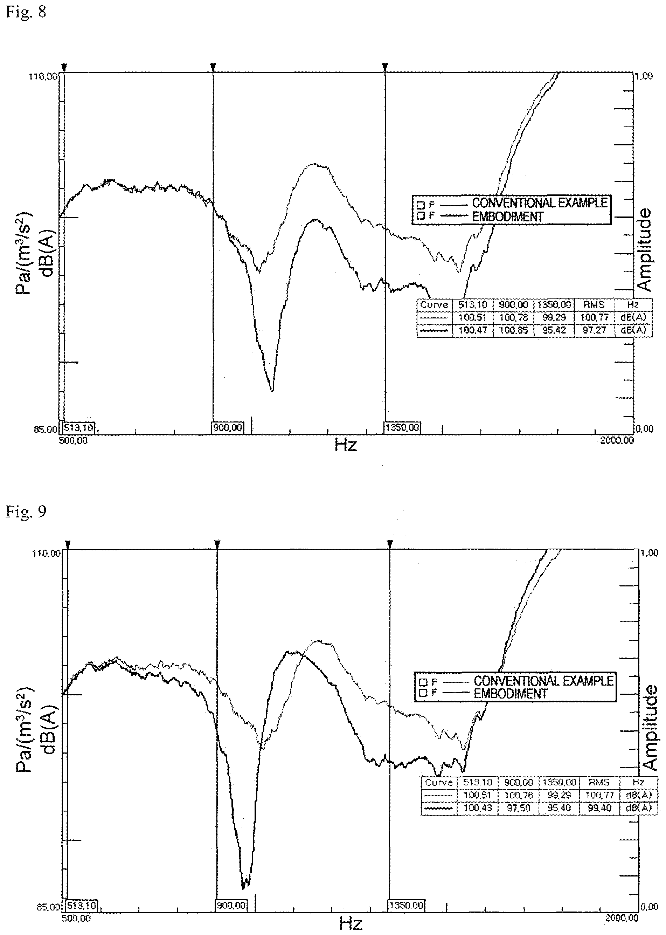

Figs. 8 and 9 are graphs showing the pipe resonance noise according to the shape of the knurled portion according to the embodiment of the present invention.

Also, referring to Figs. 8 and 9, a mock-up experiment has been performed by changing the height, width, and spacing factors of the protrusions in order to limit the numerical value of the knurled portion 120 of the tire.

The protrusion height of the protrusion refers to a height of the embossed protrusion from the bottom surface of the groove portion 110, and has been changed to two levels of 0.6 mm and 1.2 mm. The width refers to a width of the protrusion, and has been changed to two levels of 0.6 mm and 1.2 mm. The spacing refers to a spacing between the ends of the groove wall. If the spacing is narrow, the protrusions are densely arranged. The spacing has been changed to two levels of 10 mm and 30 mm.

In the experiment, a frequency response function between the Q-source, that is a shaker, and the microphone has been observed in the same manner as in the previous experiment. As a result of the experiment, as shown in Fig. 8, when the height, thickness, and spacing of the protrusion are 0.6 mm, 1.2 mm, and 10 mm, respectively, the greatest reduction effect in the pipe resonance noise band can be obtained. The conventional example shows a simple groove mock-up without knurling portion applied, and the embodiment of the present invention shows a mock-up of a tire with the noise-reducing main grooves having the knurled portion 120 to which the corresponding dimensions have been applied. As shown, according to the embodiment compared to the conventional example, the noise has been reduced by about 3.5 dB based on the RMS in a band of 900 Hz to 1350 Hz.

Also, referring to Fig. 9, according to the embodiment in which minimum numerical values applied to the protrusion height, thickness, and spacing of the knurled portion 120 are the height of 0.6 mm, thickness of 0.6 mm, and 30 mm of spacing, noise of about 1.3 dB has been reduced compared to the conventional example.

As described above, the peak of the pipe resonance noise is reduced by forming the knurled portion 120 in the groove portion 110 of the tire according to the embodiment of the present invention, so that noise generated from the tire during the driving can be reduced.

Further, according to the present invention, even if the knurling portion 120 is formed in the groove portion 110 of the tire to reduce the peak of the host resonance sound, the drainage function of the groove portion 110 may not be deteriorated.

The above descriptions of the embodiment of the present invention are illustrative only.

The foregoing embodiments and advantages are merely exemplary and are not to be construed as limiting the present invention. For example, each component described as a single type may be embodied in a distributed manner, and likewise, components described in a distributed manner may also be embodied in a coupled form.

The scope of the present invention is described by the following claims, and all alternatives, modifications, and variations which are derived from the meaning and scope of the claims should be construed as being included in the scope of the present invention.

### REFERENCE NUMERALS

1000: tire with noise-reducing main grooves
100: first noise-reducing main groove
200: second noise-reducing main groove
300: third noise-reducing main groove
400: fourth noise-reducing main groove
110, 210, 310, 410: groove portions
120, 220, 320, 420: knurled portions
121, 221, 321, 421: first protrusions
122, 222, 322, 422: second protrusions
123, 223, 323, 423: third protrusions

## Claims

1. A tire (1000) with noise-reducing main grooves (100, 200, 300, 400), the tire (1000) comprising:
a groove portion (110. 120, 130, 140) which is formed to extend circumferentially along a circumference of a tire tread; and
a plurality of knurled portions (120, 220, 320, 420) which are formed on bottom and side surfaces of the groove portion (110. 120, 130, 140),
wherein the plurality of knurled portions (120, 220, 320, 420) are configured to reduce noise energy by narrowing an air path formed when the groove portion (110. 120, 130, 140) and the ground contact each other,
wherein each of the knurled portions (120, 220, 320, 420) comprises:
a first protrusion (121, 221, 321, 421) which is formed on the bottom surface of the groove portion (110. 120, 130, 140) and extends in a width direction of the groove portion (110. 120, 130, 140) and extends in a diagonal direction;
a second protrusion (122, 222, 322, 422) which is formed to extend in a height direction of one side of the groove portion (110. 120, 130, 140) and extends from one side of the first protrusion (121, 221, 321, 421) in the same direction as that of the first protrusion (121, 221, 321, 421); and
a third protrusion (123, 223, 323, 423) which is formed to extend in a height direction of the other side of the groove portion (110. 120, 130, 140) and extends from the other side of the first protrusion (121, 221, 321, 421) in the same direction as that of the first protrusion (121, 221, 321, 421),
wherein the plurality of the knurled portions (120, 220, 320, 420) are formed to extend in zigzags in a longitudinal direction of the groove portion (110. 120, 130, 140), and are directly connected to each other,
**characterized in that**
protrusion heights of the second protrusion (122, 222, 322, 422) and the third protrusion (123, 223, 323, 423) decrease gradually toward upper portions thereof.

2. The tire of claim 1,
wherein one side of the second protrusion (122, 222, 322, 422) extends with the first protrusion (121, 221, 321, 421), and the other side of the second protrusion (122, 222, 322, 422) extends with the second protrusion (122, 222, 322, 422) of a first adjacent knurled portion (120, 220, 320, 420), and
wherein one side of the third protrusion (123, 223, 323, 423) extends with the first protrusion (121, 221, 321, 421), and the other side of the third protrusion (123, 223, 323, 423) extends with the third protrusion (123, 223, 323, 423) of a second adjacent knurled portion (120, 220, 320, 420).

3. The tire (1000) of claim 1, wherein a protrusion height of the knurled portion (120, 220, 320, 420) is greater than 0 and less than or equal to 0.8 mm.

4. The tire (1000) of claim 1, wherein a thickness of the knurled portion (120, 220, 320, 420) is from 0.6 mm to 1.2 mm.

5. The tire (1000) of claim 1, wherein the knurled portions (120, 220, 320, 420) are connected in zigzags such that a pitch interval is from 10 mm to 30 mm.

## Patentansprüche

1. Ein Reifen (1000) mit rauschreduzierenden Hauptrillen (100, 200, 300, 400), wobei der Reifen (1000) folgende Merkmale aufweist:
einen Rillenabschnitt (100. 120, 130, 140), der gebildet ist, um sich umfangsmäßig entlang einem Umfang einer Reifenlauffläche zu erstrecken; und
eine Mehrzahl von geränderten Abschnitten (120, 220, 320, 420), die an Boden- und Seitenoberflächen des Rillenabschnitts (100. 120, 130, 140) gebildet sind,
wobei die Mehrzahl von geränderten Abschnitten (120, 220, 320, 420) konfiguriert sind, Rauschenergie zu reduzieren durch Verschmälern eines Luftwegs, der gebildet wird, wenn der Rillenabschnitt (110. 120, 130, 140) und der Boden einander kontaktieren,
wobei jeder der geränderten Abschnitte (120, 220, 320, 420) folgende Merkmale aufweist:
einen ersten Vorsprung (121, 221, 321, 421), der an der Bodenoberfläche des Rillenabschnitts (100. 120, 130, 140) gebildet ist und sich in einer Breiterichtung des Rillenabschnitts (100. 120, 130, 140) erstreckt und sich in einer Diagonalrichtung erstreckt;
einen zweiten Vorsprung (122, 222, 322, 422), der gebildet ist, um sich in einer Höhenrichtung einer Seite des Rillenabschnitts (110. 120, 130, 140) zu erstrecken und sich von einer Seite des ersten Vorsprungs (121, 221, 321, 421) in der gleichen Richtung erstreckt wie diejenige des ersten Vorsprungs (121, 221, 321, 421); und
einen dritten Vorsprung (123, 223, 323, 423), der gebildet ist, um sich in einer Höhenrichtung der anderen Seite des Rillenabschnitts (110. 120, 130, 140) zu erstrecken und sich von der anderen Seite des ersten Vorsprungs (121, 221, 321, 421) in der gleichen Richtung erstreckt wie diejenige des ersten Vorsprungs (121, 221, 321, 421),
wobei die Mehrzahl von geränderten Abschnitten (120, 220, 320, 420) gebildet ist, um sich zickzackförmig in einer Längsrichtung des Rillenabschnitts (110. 120, 130, 140) zu erstrecken, und direkt miteinander verbunden sind,
**dadurch gekennzeichnet, dass**
Vorsprungshöhen des zweiten Vorsprungs (122, 222, 322, 422) und des dritten Vorsprungs (123, 223, 323, 423) sich zu oberen Abschnitten desselben hin allmählich verringern.

2. Der Reifen gemäß Anspruch 1,
bei dem eine Seite des zweiten Vorsprungs (122, 222, 322, 422) sich mit dem ersten Vorsprung (121, 221, 321, 421) erstreckt und die andere Seite des zweiten Vorsprungs (122, 222, 322, 422) sich mit dem zweiten Vorsprung (122, 222, 322, 422) eines ersten benachbarten geränderten Abschnitts (120, 220, 320, 420) erstreckt und
wobei eine Seite des dritten Vorsprungs (123, 223, 323, 423) sich mit dem ersten Vorsprung (121, 221, 321, 421) erstreckt und die andere Seite des dritten Vorsprungs (123, 223, 323, 423) sich mit dem dritten Vorsprung (123, 223, 323, 423) eines zweiten benachbarten geränderten Abschnitts (120, 220, 320, 420) erstreckt.

3. Der Reifen (1000) gemäß Anspruch 1, bei dem eine Vorsprungshöhe des geränderten Abschnitts (120, 220, 320, 120) größer als 0 und kleiner oder gleich 0,8 mm ist.

4. Der Reifen (1000) gemäß Anspruch 1, bei dem eine Dicke des geränderten Abschnitts (120, 220, 320, 420) von 0,6 mm bis 1,2 mm reicht.

5. Der Reifen (1000) gemäß Anspruch 1, bei dem die geränderten Abschnitte (120, 220, 320, 420) zickzackförmig verbunden sind, so dass ein Teilungsabstand von 10 mm bis 30 mm reicht.

## Revendications

1. Pneu (1000) à rainures principales réduisant le bruit (100, 200, 300, 400), le pneu (1000) comprenant:
une partie de rainures (110, 120, 130, 140) qui est formée de manière à s'étendre de manière circonférentielle le long d'une circonférence d'une bande de roulement de pneu; et
une pluralité de parties moletées (120, 220, 320, 420) qui sont formées sur les surfaces inférieure et latérales de la partie de rainures (110, 120, 130, 140),
dans lequel la pluralité de parties moletées (120, 220, 320, 420) sont configurées pour réduire l'énergie de bruit en rétrécissant un trajet d'air formé lorsque la partie de rainures (110, 120, 130, 140) et le sol entrent en contact l'un avec l'autre,
dans lequel chacune des parties moletées (120, 220, 320, 420) comprend:
une première saillie (121, 221, 321, 421) qui est formée sur la surface inférieure de la partie de rainures (110, 120, 130, 140) et s'étend dans une direction de la largeur de la partie de rainures (110, 120, 130, 140) et s'étend dans une direction diagonale;
une deuxième saillie (122, 222, 322, 422) qui est formée de manière à s'étendre dans la direction de la hauteur d'un côté de la partie de rainures (110, 120, 130, 140) et s'étend à partir d'un côté de la première saillie (121, 221, 321, 421) dans la même direction que celle de la première saillie (121, 221, 321, 421); et
une troisième saillie (123, 223, 323, 423) qui est formée de manière à s'étendre dans une direction de la hauteur de l'autre côté de la partie de rainures (110, 120, 130, 140) et s'étend à partir de l'autre côté de la première saillie (121, 221, 321, 421) dans la même direction que celle de la première saillie (121, 221, 321, 421),
dans lequel la pluralité des parties moletées (120, 220, 320, 420) sont formées de manière à s'étendre en zigzags dans une direction longitudinale de la partie de rainures (110, 120, 130, 140), et sont directement connectées l'une à l'autre,
**caractérisé par le fait que**
les hauteurs de saillie de la deuxième saillie (122, 222, 322, 422) et de la troisième saillie (123, 223, 323, 423) diminuent progressivement vers les parties supérieures de ces dernières.

2. Pneu selon la revendication 1,
dans lequel un côté de la deuxième saillie (122, 222, 322, 422) s'étend avec la première saillie (121, 221, 321, 421), et l'autre côté de la deuxième saillie (122, 222, 322, 422) s'étend avec la deuxième saillie (122, 222, 322, 422) d'une première partie moletée adjacente (120, 220, 320, 420), et
dans lequel un côté de la troisième saillie (123, 223, 323, 423) s'étend avec la première saillie (121, 221, 321, 421), et l'autre côté de la troisième saillie (123, 223, 323, 423) s'étend avec la troisième saillie (123, 223, 323, 423) d'une deuxième partie moletée adjacente (120, 220, 320, 420).

3. Pneu (1000) selon la revendication 1, dans lequel une hauteur de saillie de la partie moletée (120, 220, 320, 420) est supérieure à 0 et inférieure ou égale à 0,8 mm.

4. Pneu (1000) selon la revendication 1, dans lequel l'épaisseur de la partie moletée (120, 220, 320, 420) est de 0,6 mm à 1,2 mm.

5. Pneu (1000) selon la revendication 1, dans lequel les parties moletées (120, 220, 320, 420) sont connectées en zigzags de sorte qu'un intervalle de pas soit de 10 mm à 30 mm.
